Europäisches Patentamt

(19) European Patent Office

Office européen des brevets

(11) Publication number: **0 095 520**
**B1**

# (12) EUROPEAN PATENT SPECIFICATION

(45) Date of publication of patent specification: **17.12.86**

(51) Int. Cl.⁴: **F 02 P 5/04, F 02 P 11/06**

(21) Application number: **82104831.1**

(22) Date of filing: **02.06.82**

(54) Ignition timing control system for an internal combustion engine.

(43) Date of publication of application:
**07.12.83 Bulletin 83/49**

(45) Publication of the grant of the patent:
**17.12.86 Bulletin 86/51**

(84) Designated Contracting States:
**DE FR GB**

(56) References cited:
**DE-A-2 918 420**
**FR-A-2 468 113**
**US-A-4 320 729**

**PATENTS ABSTRACTS OF JAPAN, vol. 5, no.
105(M-77)(777), 8th July 1981**

**PATENTS ABSTRACTS OF JAPAN, vol. 4, no.
17, 9th February 1980, page 144M91**

(73) Proprietor: **MITSUBISHI DENKI KABUSHIKI
KAISHA**
**2-3, Marunouchi 2-chome Chiyoda-ku
Tokyo 100 (JP)**

(72) Inventor: **Komurasaki, Satoshi
c/o Mitsubishi Denki K.K. Himeji Works
No. 840, Chiyoda-cho Himeji-shi Hyogo (JP)**

(74) Representative: **Lehn, Werner, Dipl.-Ing. et al
Hoffmann, Eitle & Partner Patentanwälte
Arabellastrasse 4 (Sternhaus)
D-8000 München 81 (DE)**

## Description

The present invention relates to an ignition timing control system for an internal combustion engine and comprising: switching means for interrupting the power supply to an ignition coil in response to an ignition signal, said switching means being arranged to supply power to said ignition coil during intervals each beginning with a starting time and terminating with a blocking time; ignition signal generating means for generating said ignition signal in synchronism with the revolution of said engine; an acceleration sensor for detecting the vibratory acceleration of said engine; timing control means for controlling the timing of said switching means by said ignition signal in accordance with engine knocking as determined by said acceleration sensor; and malfunction detecting means for generating a malfunction detection signal in response to detection of malfunction of said acceleration sensor.

Such a system is known from US—A—4 320 729 and can be used to restrain knocking of an internal combustion engine.

It is desired that the ignition timing of an internal combustion engine be set so as to be most efficient for the running mode of the engine. It is also generally desired that the ignition timing be so set as to fall within a range, in which the engine is free from any knocking, as close as possible to the 'MBT" (i.e. Minimum·advance for Best Torque). However, most of the ignition timing control systems according to the prior art are of such mechanical type that their ignition angle advancing characteristics are unstable due to variation in materials and due to aging. In order to prevent knocking, therefore, the actual ignition timing is set at a considerably retarded angle with respect to the aforementioned desirable ignition angle advancing characteristics.

At this retarded angle, the efficiency of the engine is degraded. Moreover, even if an ignition timing control system is used having neither significant materials variation nor aging problems, the knocking phenomena are influenced by the temperature and moisture of the intake air as well as the air-fuel ratio of the engine. As a result, even if the ignition timing is so set that no knocking takes place under a certain condition, there is a danger that knocking will nevertheless occur under different running conditions.

With this in mind, US—A—4 320 729 effects a control function to detect the knocking and retard the ignition timing if knocking occurs, and the ignition timing can be so adjusted that little knocking takes place even if an error is caused in the ignition angle advancing characteristics due to the material characteristic variations inherent in the mechanical type or due to the difference in running conditions, as has been described hereinbefore.

Thus, the ignition timing control system of the above type is able to achieve the optimum ignition timing by setting in advance the reference ignition angle advancing characteristics at a more advanced angle so as to come closer to the MBT and by effecting an angle retarding control at a proper time in response to the occurrence of knocking.

In case, however, the knocking detecting system malfunctions, there arises a problem. Specifically, if the knocking detecting system malfunctions, no knocking information is obtained so that the proper angle retarding control cannot be accomplished. This results in a serious problem that the engine is so highly vibrated by the knocking that it may possibly be damaged.

To cope with this problem, US—A—4 320 729 discloses a fault detecting circuit which, upon detection of a knocking detector malfunction, sets the ignition timing to a predetermined retarded value.

However, it has now been realised that if the knocking detector fails to operate, it may nevertheless happen that signals are induced in the fault detecting circuit as a result of spark generation in the engine leading to erroneous lack of response of the fault detection circuit.

Although DE—A—29 18 420 and FR—A—2 468 113 suggest only looking at the detector output at times when knocking may be expected, it has not previously been realised that a similar measure should be applied to the fault detecting circuit; in particular it has not previously been realised that ignition induced voltages may cause false response of the fault detecting circuit so that measures should be taken to prevent this.

According to the invention, the system defined in the first paragraph of this specification is characterised in that said malfunction detection means comprises gate means for receiving said sensor output and for intermittently blocking the passage of said sensor output in synchronism with operation of said switching means and discriminating means for detecting sensor malfunction in accordance with the output of said gate means; said gate means is arranged to block said sensor output in response to gate control signals; and said malfunction detection means further comprises gate control means for generating said gate control signals at at least one of said starting times and blocking times.

With use of the present invention, it is possible thus to provide an ignition timing control system for preventing knocking and for detecting the malfunction of a vibratory acceleration type knocking detecting system, said ignition timing control system being able to detect the malfunction in the output signal line of the vibratory acceleration sensor or the acceleration sensor of the engine and to detect that malfunction without difficulty.

An embodiment of the invention will now be described by way of example making reference to the accompanying drawings, in which:

Fig. 1 is a block diagram showing an embodiment of the present invention;

Fig. 2 is a graph illustrating the output characteristics of the acceleration sensor of Fig. 1;

Fig. 3, 4 and 5 are diagrams illustrating the operating waveforms of the respective portions of Fig. 1; and

Fig. 6 is a graph illustrating the characteristics for explaining the operations of Fig. 1.

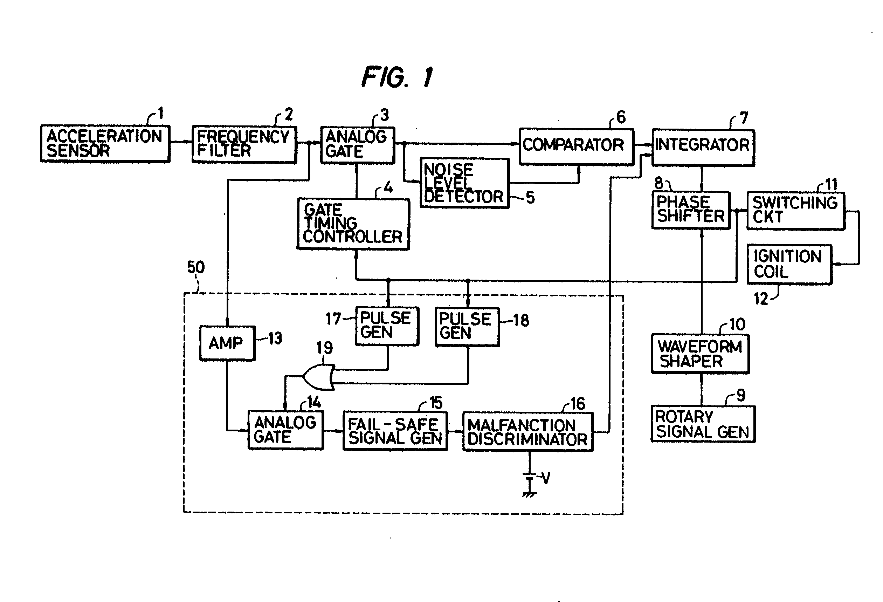

The present invention will now be described in connection with one exemplary embodiment thereof with reference to the accompanying drawings. First of all, in Fig. 1: reference numeral 1 indicates an acceleration sensor which is attached to the engine for detecting the vibratory acceleration of the engine; numeral 2 indicates a frequency filter for passing that signal component of the output signal of the accelerating sensor 1 which has a frequency highly sensitive to the knocking; numeral 3 indicates an analog gate for blocking noise in the output signal of the frequency filter 2 which interferes with the knocking detection; numeral 4 indicates a gate timing controller for commanding the opening and closure of the analog gate 3 in response to the generation timing of the interfering induced ignition noises; numeral 5 indicates a noise level detector for detecting the level of mechanical vibration noises of the engine other than knocking; numeral 6 indicates a comparator for comparing the output voltage of the analog gate 3 and the output voltage of the noise level detector 5 for generating knocking detection pulses; numeral 7 indicates an integrator for integrating the output pulses of the comparator 6 to generate an integrated voltage according to the intensity of the knocking; numeral 8 indicates a phase shifter for shifting the position of a reference ignition signal in response to the output voltage of the integrator 7; numeral 9 indicates a rotary signal generator for generating an ignition signal in accordance with predetermined ignition angle advancing characteristics; numeral 10 indicates a waveform shaper for simultaneously shaping the waveform of the output of the rotary signal generator 9 and controlling the break of the power supply to an ignition coil 12; and numeral 11 indicates a switching circuit for interrupting the power supply to the ignition coil 12 in response to the output signal of the phase shifter 8.

Reference numeral 50 indicates a malfunction detecting circuit which is constructed as follows. Specifically: numeral 13 indicates an amplifier for amplifying the output of the frequency filter 2; numeral 14 indicates an analog gate for blocking the output signal of the amplifier 13 in response to the output of an OR circuit 19; numeral 15 indicates a fail-safe signal generator for generating a fail-safe detection signal from the signal blocked; numeral 16 indicates a malfunction discriminating circuit for discriminating the malfunction of the vibratory acceleration detecting system by comparing the levels of the output of that fail-safe signal generator 15 and a reference voltage V; and numerals 17 and 18 indicates pulse generators for generating pulses of predetermined durations at the starting and blocking of the power supply to the ignition coil 12, respectively, in synchronism with the rise and break of the output of the phase shifter 8.

The aforementioned OR circuit 19 generates its OR signal from the outputs of the pulse generators 17 and 18. Moreover, the aforementioned malfunction discriminating circuit 16 generates its voltage output at a predetermined level, when the acceleration sensor 1 malfunctions, to effect the phase shift of the phase shifter 8 by a predetermined retarded angle through the integrator 7.

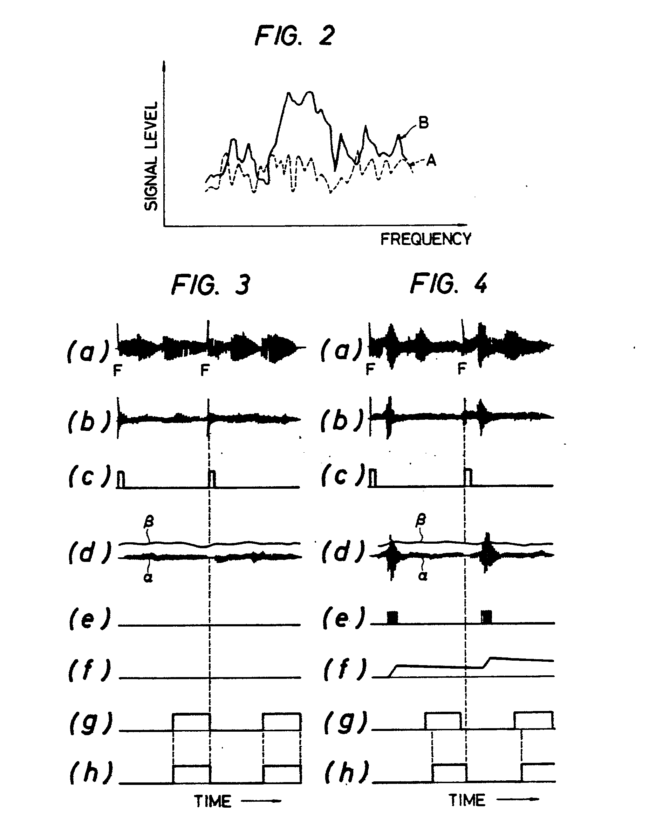

The frequency characteristics of the output signal of the acceleration sensor 1 are shown in Fig. 2. Curve A corresponds to the case in which there is no knocking, whereas curve B corresponds to the case in which knocking takes place. The output of acceleration sensor 1 contains a knock signal (which is generated as a result of knocking), other mechanical noises of the engine, and a variety of noise components, such as ignition noises, which are to be carried in signal transmission passages. The comparison of the curves A and B of Fig. 2 will reveal that the knock signal has intrinsic frequency characteristics. This distribution is clearly different, depending for example upon the differences in the engine type and in the attached position of the acceleration sensor 1. By passing the frequency component belonging to the knock signal, therefore, the noises of other frequency components can be filtered out so that the knock signal can be efficiently detected.

The operating waveforms of the respective portions of Fig. 1 are shown in Figs. 3 and 4, in which identical reference characters indicated waveforms of identical portions. Fig. 3 illustrates operation in which knocking of the engine does not take place, whereas Fig. 4 illustrates operation in which the knocking of the engine takes place.

The operation of the embodiment of Fig. 1 will now be described in detail.

The rotary signal, which is generated by the rotary signal generator 9 in accordance with ignition timing characteristics which have been predetermined in dependence upon the r.p.m. of the engine, has its waveform shaped by the action of the waveform shaper 10 into "on" and "off" pulses having a desired breaking angle. The signal thus shaped drives the switching circuit 11 through the phase shifter 8 thereby to interrupt the power supply to the ignition coil 12 so that the engine is ignited and run by the ignition voltage of the ignition coil 12, which is generated when the power supply current is blocked. The vibrations of the engine, which are caused during the running operation of the engine, are detected by the action of the acceleration sensor 1.

If there is no knocking of the engine, the vibrations of the engine due to knocking are not generated. Other mechanical vibrations will result in an output signal of the acceleration sensor 1 as illustrated in Fig. 3(a), containing mechanical noises and ignition noises which are to be carried on the signal transmission passage at an ignition timing F. That output signal can have its mechanical noise component considerably filtered out as illustrated in Fig. 3(b), after it has passed through the frequency filter 2. However, the ignition noise component is so intense that it may continue to be present at a high level even after it has passed through the frequency filter 2. Since such ignition noises may be misjudged as a knocking signal, the analog gate 3 is closed for a time period after the ignition timing by the output (which is illustrated in Fig. 3(c)) of the gate timing controller 4, which is to be triggered by the output of the phase shifter 8. This will block the ignition noises which occur during the periods of the pulses shown in Fig. 3(c). As a result, at the output of the analog gate 3, there are left only low level mechanical noises as indicated at (α) in Fig. 3(d).

On the other hand, the noise level detector 5 responds to the change in the peak value of the output signal of the analog gate 3 to generate, in this case, a d.c. voltage which can respond to the relatively gentle change in the peak value of the usual mechanical noises and which is slightly higher than the peak value of the mechanical noises (as indicated at (β) in Fig. 3(d)). Since the output of the noise level detector 5 is higher than the average peak value of the output signal of the analog gate 3, no output is generated from the comparator 6, as illustrated in Fig. 3(e), so that all the noise signals are eliminated. As a result, the output voltage of the integrator 7 is left at a zero level, as illustrated in Fig. 3(f), and the phase angle (which corresponds to the phase difference of the input from shaper 10 shown in Fig. 3(g) and output of phase shifter 8 shown in Fig. 3(h)) remains at zero. As a result, the "on" and "off" phases of the switching circuit 11 which is driven by that output, i.e., the interruption phases of the power supply to the ignition coil 12, are in phase with the reference ignition signal of the output of the waveform shaper 10 so that the ignition timing is the same as the reference timing.

In case knocking takes place, on the other hand, the output of the acceleration sensor 1 contains the knocking signal which occurs during an interval a certain time after the ignition timing, as illustrated in Fig. 4(a). After passing through the frequency filter 2 and the analog gate 3, the signal will include knocking signals superimposed upon the mechanical noises, as indicated in Fig. 4(d). Of the signals having passed through the analog gate 3, the knocking signal has a steep rise which is faster than can be tracked by the noise detector 5, so that the level of the output voltage of the noise level detector 5 is delayed in responding to the knocking signal. As a result, the inputs to the comparator 6 are as indicated at (α) and (β) in Fig. 4(d) so that pulses illustrated in Fig. 4(e) are generated at the output of the comparator 6. The integrator 7 integrates those pulses and generates an integrated voltage as illustrated in Fig. 4(f). Moreover, since the phase shifter 8 shifts the reference ignition signal of Fig. 4(g) to a retarded angle in accordance with the output voltage of the integrator 7, the phase shifter shown in Fig. 4(h) has its phase retarded with respect to the phase of the reference ignition signal of the waveform shaper 10 so that the switching circuit 11 is driven with the phase illustrated in Fig. 4(h). As a result, the ignition timing is retarded to obtain a state at which the knocking is prevented. It should be noted that the ignition timings F in Figs. 3 and 4 are not fixed and that the timings F of Fig. 3 are not the same as those in Fig. 4. Rather, the timings F are defined by the trailing edges of the pulses in Figs. 3(h) and 4(h).

In the absence of a malfunction detection circuit it will be apparent that correct operation of Figs. 4(a)—4(h) is not achieved if the knocking signal portion of Fig. 4(b) is not generated. Thus, if a knock occurs but is not detected, the circuit will always function as in Figs. 3(a)—3(h) and the knocking will not be corrected.

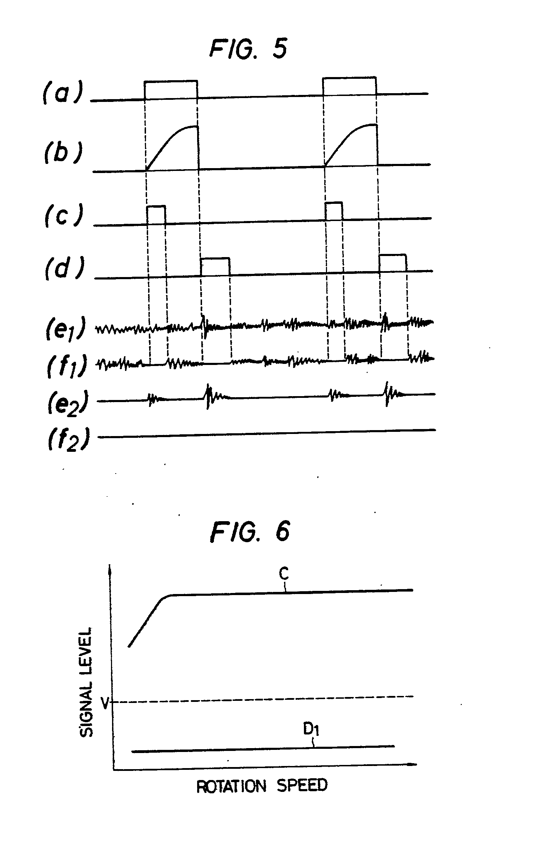

Next, the operation of the malfunction detecting circuit 50 will be described with reference to the operating waveform diagram of Figs. 5(a)—5(f₂). Fig. 5(a) illustrates the "on" and "off" outputs of the phase shifter 8 corresponding to Figs. 3(h) and 4(h); Fig. 5(b) illustrates an electric current flowing through the ignition coil 12; Figs. 5(c) and 5(d) illustrate the output pulses of the pulse generators 17 and 18, respectively; and Figs. 5(e₁) and 5(e₂), and 5(f₁) and 5(f₂) illustrate the output of the amplifier 13 and the outputs of the analog gate 14, respectively, Figs. 5(e₁) and 5(f₁) corresponding to the case in which the acceleration detecting system is normal and Figs. 5(e₂) and 5(f₂) corresponding to the case in which the acceleration detecting system is abnormal.

First of all, in case the vibratory acceleration detecting system is normal, the amplifier 13 is fed with the output of the acceleration sensor 1 through the frequency filter 2. As a result, the output of the amplifier 13 is fed to the gate 14 in the form of the signal which contains both the vibrations and ignition noises detected in the acceleration sensor 1, as illustrated in Fig. 5(e₁). On the other hand, the pulse generators 17 and 18 generate, in synchronism with the rising and falling edges of the pulses output from the phase shifter 8, pulses having a predetermined time width as shown in Figs. 5(c) and 5(d). These are combined in the OR circuit 19 to thereby control the aforementioned analog gate 14. As a result, the output of the analog gate 14 becomes a signal of the form shown in Fig. 5(f₁), which is prepared by blocking the output (e₁) of the amplifier in synchronism with the starting and blocking of the power supply to the ignition coil 12. The signal thus prepared is converted into a d.c. voltage, which has its peak value detected by the fail-safe signal generator 15 having an integrating function. The fail-safe signal generator 15 has the same operation as that of the aforementioned noise level detector 5 and functions to respond to the relatively gentle fluctuations in the peak value. The characteristics of the generator 15 output signal may be as illustrated in Fig. 6.

If the vibratory acceleration detecting system is normal, a vibration detection signal is generated as illustrated in Fig. 5(e₁), and there will be a vibration signal present in the output of the analog gate 14 during the passing interval of the gate as illustrated in Fig. 5(f₁). Thus, the output of the generator 15 may be as shown at C in Fig. 6.

Incidentally, the vibratory acceleration of the engine becomes higher for higher r.p.m., but the signal generator 15 is selected such that its ouptut characteristics are saturated substantially all over the r.p.m. range. This output is compared with the set voltage V by the discriminator 16 but is higher than that voltage V under normal conditions, so that no abnormal output is indicated by discriminator 16 and the ignition timing control circuitry functions as described above.

If a malfunction such as a break or a short-circuiting of the vibratory acceleration detecting system takes place, the vibratory acceleration cannot be detected. As a result, the input of the amplifier 13 is nothing but induction noises such as ignition noises, and the input of the analog gate 14 becomes such an intermittently generated signal as is illustrated in Fig. 5(e₂). Since the induction noises are practically restricted to the ignition noises, the output signal of the amplifier 13 is generated, as illustrated in Fig. 5(e₂), at the starting and blocking of the power supply to the ignition coil 12. Moreover, since the analog gate 14 blocks the signal at the starting and blocking of that power supply, the input of the fail-safe signal generator 15 in an abnormal state has no signal, as illustrated in Fig. 5(f₂), so that its output assumes a bias level as illustrated at D₁ in Fig. 6. The discriminater 16 then generates a malfunction detection signal to maintain the output of the integrator 7 at a predetermined level, since its output is lower than the predetermined voltage (V), and the angle of retardation by the phase shifter 8 is controlled to a predetermined value to retard the ignition timing by a predetermined angle.

Since the induction level of the ignition noises changes with the conditions of the wiring harness, the performance of the ignition system, the gap of the ignition plug or the like, the noise generating time period will change accordingly. It is, therefore, desired that the signals of the pulse generators 17 and 18 (as illustrated in Figs. 5(c) and 5(d)) be pulses of long duration so as to completely block the noises. In order to prevent a reduction in the level of the curve C of Fig. 6 even when the system is operating normally, and especially to prevent an excessive level reduction within a low r.p.m. range where the vibratory acceleration may be low, the pulse width is restricted. As a result, the amount of blocking the ignition noises in an abnormal state of operation may be low enough that the characteristics D₁ of Fig. 6 may sometimes rise or fall more or less in proportion to the r.p.m.

In order to increase the output level difference for the set voltage V in the aforementioned manner, it is preferred that in the normal state the gains of the amplifier 13 and the fail-safe signal generator 15 be higher and that the pulse widths of the pulse generators 17 and 18 be the smaller. In the abnormal state, on the other hand, it is preferred that those gains be lower and pulse widths be the wider. When striking a proper balance, it is necessary that those settings be determined taking the actual mounting states into consideration. It has been confirmed by our experiments that a practical and sufficient level difference (including variation in the detecting performance of the acceleration sensor 1) can be obtained, as illustrated at C and D₁ in Fig. 6. However, even if the level reduction of the characteristics C of Fig. 6 which occurs during knocking becomes so considerably high that the level itself becomes lower than the reference voltage V within a low r.p.m. range, no really serious problem arises. Specifically, an actual vehicle is hardly ever run with a low r.p.m. over a long period of time. At the start, for example, the r.p.m. of the engine is instantly raised to a value at which the level is saturated. As a result, the discriminator 16 compares the signal from the signal generator 15 with the predetermined voltage V so that it can accurately detect a malfunction in the vibratory acceleration detecting system. By this output, moreover, the integrated voltage can be generated from the integrator 7 to effect a predetermined angular retardation of the ignition timing.

As has been described hereinbefore, the system of the present invention is a system by which the output signal from the vibratory acceleration sensor is discriminated to detect the malfunction of the same, but it is not a system by which the malfunction is detected from the level of the voltage drop based upon the internal resistance of the vibratory acceleration sensor. As a result, the malfunction can be detected irrespective of the kind of vibratory acceleration sensor used. Typical known vibratory acceleration sensors include the magnetic strain sensor and the piezoelectric ceramic sensor. However, since the former detects the change in the magnetic flux due to the internal strain of a magnetic strain element by means of a coil, the malfunction can be detected if a d.c. current is fed to the internal resistance of that coil so that the voltage drop may be discriminated. According to the latter, on the contrary, since the piezoelectric ceramic element has the characteristics of a capacitor, it is difficult to detect the change in the voltage drop. According to the present invention, however, the malfunction can be detected accurately for either kind.

Incidentally, it is desired in the embodiment thus far described that the pulse width of the pulse generators 17 and 18 be set independently of each other in accordance with the generating state of the induction noises at the starting and blocking of the power supply to the ignition coil. Moreover, those pulse widths can also be controlled by an operating parameter such as the r.p.m. of the engine. Still moreover, if the comparison voltage V of the discriminator 16 is controlled in accordance with an operating parameter of the engine such as the r.p.m., the malfunction discrimination can be effected more reliably. In the foregoing embodiment, furthermore, the analog gate 14 is blocked at both the starting and blocking of the power supply to the ignition coil. However, even if the analog gate 14 is so constructed as to be blocked only in synchronism with either the blocking or the starting, operation will not be adversely affected, since the induction noises in the abnormal state of the acceleration sensor can still be substantially removed although not completely. Thus, it is possible to discriminate the normal function and malfunction of the acceleration sensor.

As has been described hereinbefore, according to the present invention, in the system for detecting the vibrations of the engine by means of an acceleration sensor to thereby control the ignition timing in response to the knocking signal obtained from the detected output, the malfunction of the acceleration sensor is discriminated on the basis of the output of a gate which is made operative to block the passage of the output of the aforementioned acceleration sensor for a predetermined time period in synchronism with the switching operation of the power supply circuit of the ignition coil. A sensor malfunction can be accurately detected while attenuating or removing the noises which are induced in the output circuit portion of the acceleration sensor. As a result, it is made possible by this malfunction detection signal to retard the excessive advance in the ignition timing or to generate a warning signal. Moreover, such malfunction can be detected irrespective of the kinds of the acceleration sensor used. The invention can also easily detect a malfunction even if the acceleration sensor is a piezoelectric ceramic element in which it is difficult to detect malfunction by the voltage drop method.

Thus a vibratory acceleration sensor may be used which may be a magnetic strain sensor or a piezoelectric ceramic sensor.

**Claims**

1. An ignition timing control system for an internal combustion engine and comprising: switching means (11) for interrupting the power supply to an ignition coil (12) in response to an ignition signal, said switching means (11) being arranged to supply power to said ignition coil (12) during intervals each beginning with a starting time and terminating with a blocking time; ignition signal generating means (9) for generating said ignition signal in synchronism with the revolution of said engine; an acceleration sensor (1) for detecting the vibratory acceleration of said engine; timing control means (7, 8) for controlling the timing of said switching means (11) by said ignition signal in accordance with engine knocking as determined by said acceleration sensor (1); and malfunction detecting means (50) for generating a malfunction detection signal in response to detection of malfunction of said acceleration sensor (1), characterised in that: said malfunction detection means (50) comprises gate means (14) for receiving said sensor output and for intermittently blocking the passage of said sensor output in synchronism with operation of said switching means (11) and discriminating means (16) for detecting sensor malfunction in accordance with the output of said gate means (14); said gate means (14) is arranged to block said sensor output in response to gate control signals; and said malfunction detection means (50) further comprises gate control means (17, 18, 19) for generating said gate control signals at at least one of said starting times and blocking times.

2. An ignition control system as claimed in claim 1 wherein said gate control means (17, 18, 19) is arranged to generate said gate control signals at both said starting times and said blocking times.

3. An ignition timing control system according to claim 1 or 2, wherein there is provided means in said timing control means (7, 8) responsive to said malfunction detection signal for controlling the timing of said switching means (11) independently of the presence or absence of engine knocking.

4. An ignition timing control system as claimed in claim 3, wherein said timing control means (7, 8) is arranged to adjust the timing of said switching device to a predetermined timing angle in response to said malfunction detection signal.

5. An ignition timing control system as claimed in claim 4, wherein timing signal generating means (9) are provided for generating said ignition signal with a timing in accordance with engine operating conditions, and said control means comprises phase shift means (8) for shifting the phase of said ignition signal in accordance with detected engine knock, said phase shift means (8) providing a predetermined phase shift in response to said malfunction detection signal.

6. An ignition timing control system as claimed in any one of the preceding claims, wherein the duration of said gate control signals is variable in accordance with an engine operating parameter.

7. An ignition timing control system as claimed in any one of claims 1 to 6, wherein said discriminating means (16) comprises means for generating a substantially d.c. signal corresponding to the amount of detected vibration represented in said gate output signal, and means for generating said malfunction detection signal when said d.c. signal is below a threshold value.

8. An ignition timing control system as claimed in claim 7, wherein said threshold value is variable in accordance with an engine operating parameter.

**Patentansprüche**

1. Vorrichtung zum Regeln des Zündzeitpunktes eines Verbrennungsmotors, umfassend: eine Schalteinrichtung (11) zur Unterbrechung der Energieversorgung zu einer Zündspule (12) in Abhängigkeit von einem Zündsignal, wobei die Schalteinrichtung (11) ausgebildet ist, um die Zündspule (12) mit Energie innerhalb von Zeitintervallen zu versorgen, die jeweils mit einer Startzeit beginnen und mit einer Sperrzeit enden, eine Zündsignal-Erzeugungseinrichtung (9) zur Erzeugung des Zündsignales synchron mit der Umdrehung des Motors, einem Beschleunigungssensor (1) zur Ermittlung der Vibrationsbeschleunigung des Motors, eine Zeitpunktregeleinrichtung (7, 8) zur Regelung des Zeitpunkts der Schalteinrichtung (11) durch das Zündsignal in Übereinstimmung mit dem durch den Beschleunigungssensor (1) ermittelten Motorklopfen und eine Fehlfunktions-Detektoreinrichtung (50) zur Lieferung eines Fehlfunktions-Detektorsignal in Übereinstimmung mit der Ermittlung der Fehlfunktion des Beschleunigungssensors (1), dadurch gekennzeichnet, daß die Fehlfunktions-Detektoreinrichtung (50) eine Toreinrichtung (14) zum Empfangen des Sensor-Ausgangssignals und zum intermittierenden Sperren des Durchgangs des Sensorausgangssignals ·synchron mit der Operation der Schalteinrichtung (11) und eine Diskriminierungseinrichtung (16) zur Ermittlung der Sensorfehlfunktion in Übereinstimmung mit dem Ausgangssignal der Toreinrichtung (14) aufweist, daß die Toreinrichtung (14) zur Sperrung des Sensorausgangssignals in Abhängigkeit von Torregelsignalen ausgebildet ist und daß die Fehlfunktions-Detektoreinrichtung (50) außerdem eine Torregeleinrichtung (17, 18, 19) zur Erzeugung der Torregelsignale zumindest in einer der Startzeiten und Sperrzeiten aufweist.

2. Vorrichtung zum Regeln des Zündzeitpunktes nach Anspruch 1, dadurch gekennzeichnet, daß die Torregeleinrichtung (17, 18, 19) so ausgestaltet ist, daß sie die Torregelsignale sowohl in den Startzeiten als auch in den Sperrzeiten erzeugt.

3. Vorrichtung zum Regeln des Zündzeitpunktes nach Anspruch 1 oder 2, dadurch gekennzeichnet, daß eine Einrichtung in der Zeitpunktregeleinrichtung (7, 8) vorgesehen ist, die auf das Fehlfunktion-Detektorsignal anspricht, um den Zeitpunkt der Schalteinrichtung (11) unabhängig vom Vorhandensein oder Nichtvorhandensein des Motorklopfens zu regeln.

4. Vorrichtung zum Regeln des Zündzeitpunktes nach Anspruch 3, dadurch gekennzeichnet, daß die Zeitpunktregeleinrichtung (7, 8) ausgebildet ist, um den Zeitpunkt der Schalteinrichtung für einen vorbestimmten Zeitpunktwinkel in Abhängigkeit von dem Fehlfunktions-Detektorsignal einzustellen.

5. Vorrichtung zum Regeln des Zündzeitpunktes nach Anspruch 4, dadurch gekennzeichnet, daß eine Zeitpunktsignal-Erzeugungseinrichtung (9) zur Erzeugung des Zündsignals mit Zeitverhalten in Übereinstimmung mit den Motor-Operationsbedingungen vorgesehen ist und daß die Regeleinrichtung eine Phasenschiebeeinrichtung (8) aufweist, um die Phase des Zündsignals in übereinstimmung mit dem ermittelten Motorklopfen zu verschieben, wobei die Phasenschiebeeinrichtung (8) eine vorbestimmte Phasenverschiebung in Abhängigkeit von dem Fehlfunktions-Detektorsignal liefert.

6. Vorrichtung zum Regeln des Zündzeitpunkts nach einem der vorhergehenden Ansprüche, dadurch gekennzeichnet, daß die Dauer der Torregelsignale variabel ist in Übereinstimmung mit einem Motor-Operationsparameter.

7. Vorrichtung zum Regeln des Zündzeitpunkts nach einem der Ansprüche 1 bis 6, dadurch gekennzeichnet, daß die Diskriminierungs- bzw. Unterscheidungseinrichtung (16) eine Einrichtung zur Erzeugung eines im wesentlichen Gleichstromsignals aufweist entsprechend dem Betrag der ermittelten Vibration, dargestellt in dem Torausgangssignal, sowie eine Einrichtung zur Erzeugung des Fehlfunktions-Detektorsignals, wenn das Gleichstromsignal unterhalb eines Schwellenwertes liegt.

8. Vorrichtung zum Regeln des Zündzeitpunkts nach Anspruch 7, dadurch gekennzeichnet, daß der Schwellenwert variabel ist in Übereinstimmung mit einem Motor-Operationsparameter.

**Revendications**

1. La présente invention porte sur un circuit de commande de l'avance à l'allumage pour moteur à combustion interne et comprend: un moyen de commutation (11) pour interrompre l'alimentation en courant électrique d'une bobine d'allumage (12) en réponse à un signal d'allumage, ledit moyen de commutation (11) étant disposé de façon à alimenter en courant électrique ladite bobine d'allumage (12) pendant des intervalles de temps commençant chacun par un temps de début et se terminant chacun par un temps d'arrêt; un moyen de génération de signal d'allumage (9) pour générer ledit signal d'allumage en synchronisation avec la rotation dudit moteur; un capteur d'accélération (1) pour détecter l'accélération vibratoire dudit moteur; des moyens de commande d'avance (7, 8) pour commander l'avance dudit moyen de commutation (11) par ledit signal d'allumage selon le cognement du moteur tel que déterminé par ledit capteur d'accélération (1); un moyen de détection d'anomalie (50) pour générer un signal d'anomalie en réponse à la détection de mauvais fonctionnement dudit capteur d'accélération (1), caractérisé en ce que: ledit moyen de détection d'anomalie (50) comprend un moyen de porte (14) pour recevoir ladite sortie du capteur et pour bloquer de manière intermittente le passage de ladite sortie du capteur en synchronisation ave le fonctionnement desdits moyen de commutation (11) et moyen de discrimination (16) pour détecter une anomalie du capteur conformément avec la sortie dudit moyen de porte (14); ledit moyen de porte (14) est disposé de façon à bloquer ladite sortie du capteur en réponse à des signaux de commande de porte; et ledit moyen de détection d'anomalie (50) comprend de plus des moyens de commande de porte (17, 18, 19) pour générer lesdits signaux de commande de porte à au moins l'un desdits temps de début et temps d'arrêt.

2. Un circuit de commande d'allumage tel que revendiqué dans la revendication 1 en quoi lesdits moyens de commande de porte (17, 18, 19) sont disposés de façon à générer lesdits signaux de commande de porte auxdits deux moments de début et d'arrêt.

3. Un circuit de commande d'avance à l'allumage tel que revendiqué dans les revendications 1 ou 2, en quoi il est fourni un moyen dans lesdits moyens de commande d'avance (7, 8) répondant audit signal de détection d'anomalie pour commander l'amplificateur dudit moyen de commutation (11) indépendamment de la présence ou de l'absence de cognement du moteur.

4. Un circuit de commande d'avance à l'allumage tel que revendiqué dans la revendication 3, en quoi lesdits moyens de commande d'amplificateur (7, 8) sont disposés de façon à adapter l'avance dudit dispositif de commutation à une angle d'avance pré-déterminé en réponse audit signal de détection d'anomalie.

5. Un circuit de commande d'avance à l'allumage tel que revendiqué dans la revendication 4, en quoi le moyen de génération de signal d'avance (9) est fourni pour générer ledit signal d'allumage avec une avance conforme aux conditions de fonctionnement du moteur, et ledit moyen de commande comporte un moyen de décaleur de phase (8) pour décaler la phase dudit signal d'allumage conformément au cognement détecté du moteur, ledit moyen de décaleur de phase (8) fournissant un décalage de phase prédéterminé en réponse audit signal de détection d'anomalie.

6. Un circuit de commande d'avance à l'allumage tel que revendiqué dans l'une quelconque des revendications précédentes, en quoi la durée desdits signaux de commande de porte varie selon un paramètre de fonctionnement du moteur.

7. Un circuit de commande d'avance à l'allumage tel que revendiqué dans l'une quelconque des revendications 1 à 6, en quoi ledit moyen de discrimination (16) comporte un moyen pour générer un signal de courant continu correspondant en grande partie à la quantité de vibration détectée représentée dans ledit signal de sortie de porte, et un moyen pour générer ledit signal de détection d'anomalie quand ledit signal de courant continu est inférieur à une valeur limite.

8. Un circuit de commande d'avance à l'allumage tel que revendiqué dans la revendication 7, en quoi ladite valeur limite varie selon un paramètre de fonctionnement du moteur.

# FIG. 1

FIG. 2

FIG. 3

FIG. 4

## FIG. 5

(a)

(b)

(c)

(d)

(e₁)

(f₁)

(e₂)

(f₂)

## FIG. 6